# EUROPÄISCHE PATENTSCHRIFT

(11) **EP 3 011 198 B1**
(45) Veröffentlichungstag und Bekanntmachung des Hinweises auf die Patenterteilung: **01.05.2019**
(21) Anmeldenummer: 14726154.9
(22) Anmeldetag: 23.05.2014
(51) Int. Cl.: B60G 11/27, F16F 9/05, F16F 9/04

(54) **LUFTFEDER**
AIR SPRING
RESSORT PNEUMATIQUE

(30) Priorität: 20.06.2013 DE 102013211666
(43) Veröffentlichungstag der Anmeldung: 27.04.2016
(73) Patentinhaber: Continental Teves AG & Co. OHG, 60488 Frankfurt am Main (DE)
(72) Erfinder: PIELOCK, Ralf, 29690 Essel (DE)
(86) Internationale Anmeldenummer: PCT/EP2014/060676
(87) Internationale Veröffentlichungsnummer: WO 2014/202330

(56) Entgegenhaltungen:
- EP-A1- 2 090 801
- DE-A1-102012 201 104

## Beschreibung

Die Erfindung betrifft eine Luftfeder für Fahrzeuge mit einem zwischen einem Luftfederdeckel und einem Luftfederabrollkolben luftdicht eingespannten Luftfederbalg aus einem Verbundwerkstoff aus einem elastomeren Material mit einer oder mehreren eingebetteten Festigkeitsträgerlagen, welcher mit dem Luftfederdeckel und dem Luftfederabrollkolben einen mit Druckluft gefüllten Arbeitsraum begrenzt und der unter Ausbildung einer Rollfalte am Luftfederabrollkolben abrollt, wobei der Luftfederbalg einen ersten Teilluftfederbalg und einen zweiten Teilluftfederbalg aufweist, welche in einem Überlappungsbereich miteinander verbunden sind und Festigkeitsträgerlagen aufweisen, die in einem unterschiedlichen Winkel zu einer Luftfederlängsachse verlaufen, wobei der erste und der zweite Teilluftfederbalg durch einen frei beweglichen, im Überlappungsbereich angeordneten Klemmverbund getrennt vorgesehen sind und als Klemmverbund ein auf einer Innenseite des Luftfederbalges angeordneter Stützring vorgesehen ist, welcher mittels eines Spannrings im Luftfederbalg positioniert vorgesehen ist.

Luftfedern, die zwischen Fahrwerk und Fahrzeugkarosserie eingespannt sind und einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens ab. Eine derartige Luftfeder wird häufig in Straßen- oder Schienenfahrzeugen eingesetzt, um eine komfortable Federung zu erreichen.

Bei Luftfedern im PKW-Bereich werden möglichst dünnwandige Luftfederbälge eingesetzt, da diese einen hohen Abrollkomfort sicherstellen. Um bei diesen eine genügende Tragfähigkeit des Gesamtsystems zu erreichen, werden die Luftfederbälge bzw. die Luftfedern oder -dämpfer mit so genannten Außenführungen versehen, nämlich mit einer den Luftfederbalg umgebenden rohrförmigen Hülse als "Stützkorsett" oder Stützkörper. So lässt sich beispielsweise ein dünner Luftfederbalg mit einer dünnen Leichtmetallhülse als Stützkörper auf hohe Innendrücke und damit hohe Tragfähigkeiten bei gleichzeitig gutem Harshness-Verhalten optimieren.

Aufgrund der oft geringen Platzverhältnisse kann es notwendig sein, eine Luftfeder ohne Außenführung einzusetzen. Bei diesen sogenannten freien oder freistehenden Luftfedern ergeben kinematische Achsbewegungen sowie die Balgeigentorsion Torsionsbewegungen zwischen Luftfederdeckel und Luftfederabrollkolben. Ist der Luftfederbalg als Kreuzlagenbalg vorgesehen, kann der Balg eine Torsion mit kleinen Torsionswinkeln aufnehmen. Dagegen besteht die Gefahr bei großen Torsionswinkeln, dass die Festigkeitsträgerlagen beschädigt werden.

Um dieser Gefahr entgegen zu wirken, werden beispielsweise Torsionslagerungen in Form von Gleitlagern vorgesehen. Ebenso ist aus der DE 10 2005 045 804 A1 eine Luftfeder in Über-KopfLage bekannt, bei welcher sich der Luftfederbalg auf einem Stützring abstützt, der über ein Wälzlager an dem Luftfederdeckel gelagert ist.

Die bekannten Lösungsansätze haben allerdings den Nachteil, dass in der Regel zusätzlicher axialer Bauraum benötigt wird und dass abgestimmte Verbindungstechniken die Gestaltung der Luftfeder komplizierter und damit auch kostenintensiver machen.

Ferner ist es aus der DE 10 2012 201 104 A1 bekannt, einen Luftfederbalg aus zwei Teilluftfederbälgen vorgesehen, wobei ein oberer Teilluftfederbalg derart ausgebildet ist, dass er Torsionsbewegungen aufnehmen kann. Der untere Teilluftfederbalg, der primär Komfortanforderungen erfüllt, rollt gemäß der DE 10 2012 201 104 A1 zum einen auf der Außenseite des Abrollkolbens, zum anderen an der Innenseite einer am Luftfederbalg befestigten Außenführung ab, so dass die beiden Funktionsbereiche durch die Außenführung getrennt sind.

Der Erfindung liegt daher die Aufgabe zugrunde, eine Luftfeder für Fahrzeuge bereitzustellen, welche ohne den axialen Bauraum zu beeinflussen einerseits den Komfortanforderungen genügt und andererseits auch größere Torsionsbewegungen ohne Beschädigungen erlaubt.

Die der Erfindung zugrunde liegende Aufgabe wird mit den Merkmalen des unabhängigen Patentanspruchs 1 gelöst. Bevorzugte Ausführungsformen der Erfindung sind in den abhängigen Patentansprüchen angegeben.

Der erste und der zweite Teilluftfederbalg sind durch einen frei beweglichen, im Überlappungsbereich angeordneten Klemmverbund getrennt vorgesehen. Die Trennung der durch die beiden Teilluftfederbälge dargestellten Funktionsbereiche ist damit auch bei einer freien Luftfeder realisierbar, ohne dass weitere torsionsaufnehmende Bauteile erforderlich wären. Ferner ist dadurch die Gestaltung der Luftfederbauteile - insbesondere des Luftfederdeckels -frei.

Als Klemmverbund ist ein auf einer Innenseite des Luftfederbalges angeordneter Stützring vorgesehen, welcher mittels eines Spannrings des Luftfederbalges positioniert vorgesehen ist. Um den Klemmverbund herzustellen, können somit einfache und kostengünstige Bauteile Verwendung finden.

Erfindungsgemäß kann ein vorzeitiges Ausknicken der Luftfeder damit verhindert werden, dass der Stützring durch einen axialen Fortsatz des Luftfederdeckels radial geführt vorgesehen ist.

Vorzugsweise ist der erste Teilluftfederbalg als torsionsweiche Falte ausgebildet, wodurch der erste Teilluftfederbalg nicht nur Torsionskräfte, sondern auch Kardanikbewegungen aufnehmen kann.

Vorzugsweise sind der erste Teilluftfederbalg als Axialbalg mit zur Luftfederlängsachse parallele oder nahezu parallele Festigkeitsträgerlagen und der zweite Teilluftfederbalg als Kreuzlagenbalg mit zu der Luftfederlängsachse in einem Winkel verlaufenden Festigkeitsträgern vorgesehen. Möglich ist jedoch auch eine alternative Ausführungsform, die vorsieht, dass der erste Teilluftfederbalg als Kreuzlagenbalg mit zu der Luftfederlängsachse in einem ersten Winkel verlaufenden Festigkeitsträgern und der zweite Teilluftfederbalg als Kreuzlagenbalg mit zu der Luftfederlängsachse in einem zweiten Winkel verlaufenden Festigkeitsträgern vorgesehen sind. Der Luftfederbalg kann somit in einen Elastizitätsbereich und einen Abrollbereich unterteilt werden, wobei der erste Teilluftfederbalg derart ausgebildet ist, dass er die Torsionssteifigkeit der Luftfeder verringert, und der zweite Teilluftfederbalg an die Komfortanforderungen angepasst ist.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor. Es zeigt jeweils stark schematisiert sowie im Schnitt:
- Figur 1: ein Beispiel einer nicht erfindungsgemäßen Luftfeder und
- Figur 2: ein Ausführungsbeispiel einer erfindungsgemäßen Luftfeder.

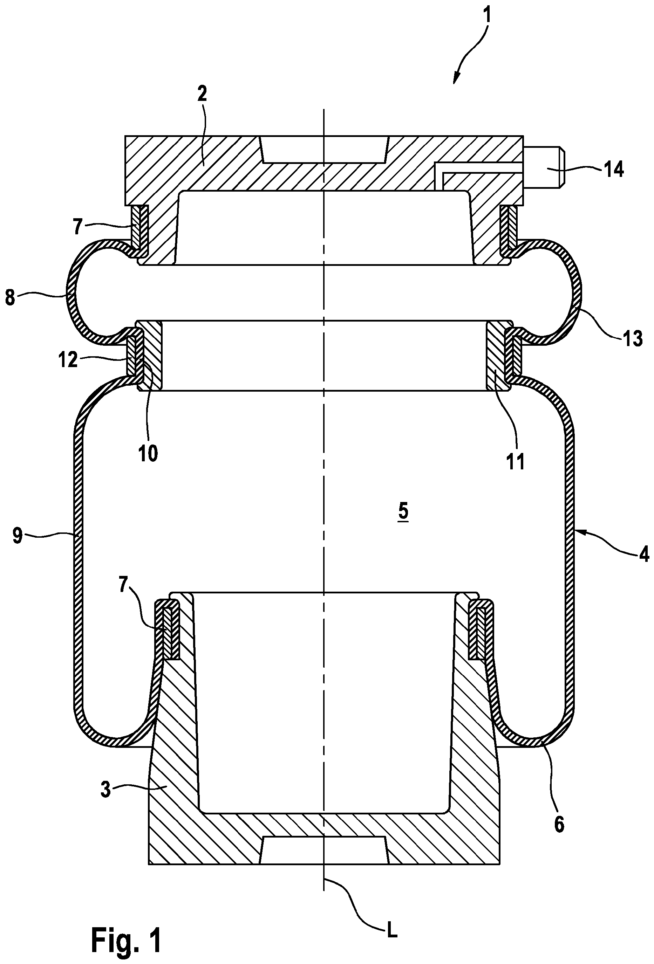

Fig. 1 zeigt in schematischer Darstellung und im Schnitt eine nicht erfindungsgemäße Luftfeder 1, die mit einem Luftfederkolben 3 und einem Luftfederdeckel 2 zwischen Fahrwerk und Fahrzeugkarosserie eines Kraftfahrzeuges eingespannt ist.

Die Luftfeder 1 weist einen an Luftfederdeckel 2 und Luftfederkolben 3 dichtend befestigten Luftfederbalg 4 aus einem Verbundwerkstoff aus einem elastomeren Material mit einer oder mehreren eingebetteten Festigkeitsträgerlagen auf, welcher mit dem Luftfederdeckel 2 und dem Luftfederabrollkolben 3 einen mit Druckluft gefüllten Arbeitsraum 5 begrenzt und der unter Ausbildung einer Rollfalte 6 an dem Luftfederkolben 3 abrollt.

Wie in der Figur ersichtlich ist, sind Endbereiche des Luftfederbalges 4 mittels Spannringen 7 an Klemmabschnitten des Luftfederdeckels 2 und des Luftfederabrollkolbens 3 befestigt.

Der Luftfederbalg 4 weist einen ersten Teilluftfederbalg 8 und einen zweiten Teilluftfederbalg 9 auf, welche in einem Überlappungsbereich 10 durch Vulkanisation miteinander verbunden sind. Um bei den beiden Teilluftfederbälgen 8,9 unterschiedliche Funktionen realisieren zu können, verlaufen die Festigkeitsträgerlagen der beiden Teilluftfederbälge 8,9 in einem unterschiedlichen Winkel zu einer Luftfederlängsachse L.

So kann beispielsweise der erste Teilluftfederbalg 8 als Axialbalg mit zur Luftfederlängsachse L parallele oder nahezu parallele Festigkeitsträgerlagen ausgebildet sein, wodurch einen elastischen, torsionsweichen Funktionsbereich bildet, der insbesondere Torsionsbewegungen aufnehmen kann.

Der zweite Teilluftfederbalg 9 ist als Kreuzlagenbalg mit zu der Luftfederlängsachse L in einem Winkel verlaufenden Festigkeitsträgern vorgesehen und bildet dadurch einen torsionssteifen, an die Komfortanforderungen angepassten Abrollbereich.

Gemäß einer alternativen Ausführungsform kann auch der erste Teilluftfederbalg 8 als Kreuzlagenbalg vorgesehen sein, wobei die Winkel der Festigkeitsträger dementsprechend angepasst werden müssen, um die gewünschte Elastizität zu erhalten.

Wie Fig. 1 zu entnehmen ist, sind die beiden Teilluftfederbälge 8,9 durch einen frei beweglichen, im Überlappungsbereich 10 angeordneten Klemmverbund getrennt.

Als Klemmverbund ist ein auf einer Innenseite des Luftfederbalges 4 angeordneter, frei beweglicher Stützring 11 vorgesehen, welcher mittels eines Spannrings 12 in dem Luftfederbalg 4 positioniert ist. Die Trennung der durch die beiden Teilluftfederbälge 8,9 dargestellten Funktionsbereiche ist damit auch bei einer freien Luftfeder einfach und kostengünstig realisierbar, ohne dass die Nachteile eines vergrößerten axialen Bauraums in Kauf genommen werden müssen.

Durch einen am Luftfederdeckel 2 angeordneten Luftanschluss 14 gelangt die Druckluft in den Arbeitsraum 5, so dass sich ein vorgegebener innerer Überdruck einstellt.

Der als Kreuzlagenbalg ausgebildete, zweite Teilluftfederbalg 9 erreicht dabei einen gewünschten Durchmesser durch die Verschränkung der Festigkeitsträger.

Der erste Teilluftfederbalg 8, welcher wie oben ausgeführt als Axial- oder Kreuzlagenbalg vorgesehen sein kann, ergibt bei Innendruck entsprechend der Winkel der Festigkeitsträger sowie Abstimmung des wirksamen Rollfaltendurchmessers zum Mittelpunkt der Torsionsfaltenkrümmung eine torsionsweiche Falte 13, so dass der erste Teilluftfederbalg 8 nicht nur Torsionskräfte, sondern auch Kardanikbewegungen aufnehmen kann.

Die axiale Position des inneren Stützrings 11 stellt sich im Gleichgewichtszustand zwischen beiden Teilluftfederbälgen 8,9 ein bzw. wird maßgeblich durch die Auslegung der oberen Falte 13 bestimmt, wobei der Durchmesser der Falte 13 durch die obere Balgbereichslänge sowie Winkel der Festigkeitsträger bestimmt wird.

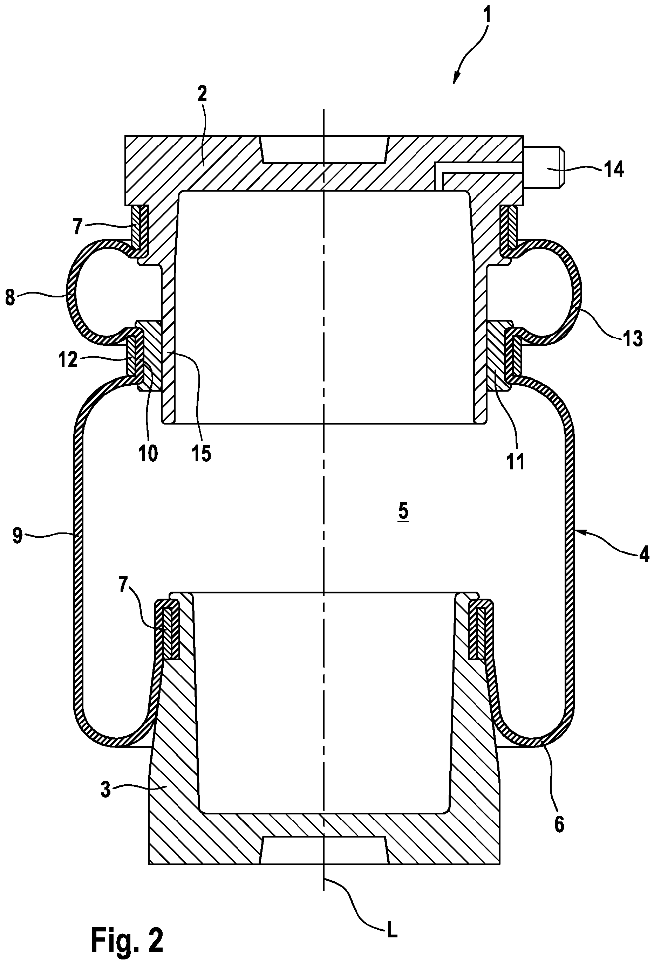

Fig. 2 zeigt ein erfindungsgemäßes Ausführungsbeispiel. Dieses unterscheidet sich lediglich darin, dass der Luftfederdeckel 2 einen axialen, umlaufenden Fortsatz 15 aufweist, durch welchen der Stützring 11 radial geführt wird. Hierdurch kann ein vorzeitiges Ausknicken der Luftfeder 1 verhindert werden.

### Bezugszeichenliste

- 1: Luftfeder
- 2: Luftfederdeckel
- 3: Luftfederabrollkolben
- 4: Luftfederbalg
- 5: Arbeitsraum
- 6: Rollfalte
- 7: Spannring
- 8: Teilluftfederbalg
- 9: Teilluftfederbalg
- 10: Überlappungsbereich
- 11: Stützring
- 12: Sapnnring
- 13: Falte
- 14: Luftanschluss
- 15: Fortsatz

- L: Luftfederlängsachse

## Patentansprüche

1. Luftfeder (1) für Fahrzeuge mit einem zwischen einem Luftfederdeckel (2) und einem Luftfederabrollkolben (3) luftdicht eingespannten Luftfederbalg (4) aus einem Verbundwerkstoff aus einem elastomeren Material mit einer oder mehreren eingebetteten Festigkeitsträgerlagen, welcher mit dem Luftfederdeckel (2) und dem Luftfederabrollkolben (3) einen mit Druckluft gefüllten Arbeitsraum (5) begrenzt und der unter Ausbildung einer Rollfalte (6) am Luftfederabrollkolben (3) abrollt, wobei der Luftfederbalg (4) einen ersten Teilluftfederbalg (8) und einen zweiten Teilluftfederbalg (9) aufweist, welche in einem Überlappungsbereich (10) miteinander verbunden sind und Festigkeitsträgerlagen aufweisen, die in einem unterschiedlichen Winkel zu einer Luftfederlängsachse (L) verlaufen, wobei der erste und der zweite Teilluftfederbalg (8,9) durch einen frei beweglichen, im Überlappungsbereich (10) angeordneten Klemmverbund getrennt vorgesehen sind und als Klemmverbund ein auf einer Innenseite des Luftfederbalges (4) angeordneter Stützring (11) vorgesehen ist, welcher mittels eines Spannrings (12) im Luftfederbalg (4) positioniert vorgesehen ist, **dadurch gekennzeichnet, dass** der Stützring (11) durch einen axialen Fortsatz (15) des Luftfederdeckels (2) radial geführt vorgesehen ist.

2. Luftfeder (1) nach Anspruch 1, **dadurch gekennzeichnet, dass** der erste Teilluftfederbalg (8) als torsionsweiche Falte (13) ausgebildet ist.

3. Luftfeder (1) nach Anspruch 1 oder 2, **dadurch gekennzeichnet, dass** erste Teilluftfederbalg (8) als Axialbalg mit zur Luftfederlängsachse (L) parallele oder nahezu parallele Festigkeitsträgerlagen und der zweite Teilluftfederbalg (9) als Kreuzlagenbalg mit zu der Luftfederlängsachse (L) in einem Winkel verlaufenden Festigkeitsträgern vorgesehen sind.

4. Luftfeder (1) nach Anspruch 1 oder 2, **dadurch gekennzeichnet, dass** erste Teilluftfederbalg (8) als Kreuzlagenbalg mit zu der Luftfederlängsachse (L) in einem ersten Winkel verlaufenden Festigkeitsträgern und der zweite Teilluftfederbalg (9) als Kreuzlagenbalg mit zu der Luftfederlängsachse (L) in einem zweiten Winkel verlaufenden Festigkeitsträgern vorgesehen sind.

## Claims

1. An air spring (1) for vehicles, having an air spring bellows (4), which is made from a composite material composed of an elastomer material with one or more embedded reinforcing layers and clamped in an airtight manner between an air spring cover (2) and an air spring rolling piston (3), which bellows together with the air spring cover (2) and the air spring rolling piston (3) defines a working chamber (5) filled with compressed air and which in forming a rolling fold (6) rolls on the air spring rolling piston (3), wherein the air spring bellows (4) comprises a first air spring bellows portion (8) and a second air spring bellows portion (9), which are connected to one another in an overlap area (10) and comprise reinforcing layers running at a different angle to an air spring longitudinal axis (L), wherein the first and the second air spring bellows portion (8,9) provided are separated by a freely movable clamped joint arranged in the overlap area (10) and a support ring (11), which is arranged on an inside of the air spring bellows (4) and which is positioned by means of a clamping ring (12) of the air spring bellows (4), is provided as clamped joint, **characterized in that** the support ring (11) is provided with radial guidance in the form of an axial extension (15) of the air spring cover (2).

2. Air spring (1) according to Claim 1, **characterized in that** the first air spring bellows portion (8) is formed as a torsionally flexible fold (13).

3. Air spring (1) according to one of the preceding claims, **characterized in that** the first air spring bellows portion (8) is provided as an axial bellows having reinforcing layers parallel or virtually parallel to the air spring longitudinal axis (L), and the second air spring bellows portion (9) as a cross-ply bellows having reinforcements running at an angle to the air spring longitudinal axis (L).

4. Air spring (1) according to one of the preceding claims, **characterized in that** the first air spring bellows portion (8) is provided as a cross-ply bellows having reinforcements running at a first angle to the air spring longitudinal axis (L), and the second air spring bellows portion (9) as a cross-ply bellows having reinforcements running at a second angle to the air spring longitudinal axis (L).

## Revendications

1. Ressort pneumatique (1) pour des véhicules avec un soufflet de ressort pneumatique (4) en un matériau composite en un matériau élastomère avec plusieurs couches d'éléments de résistance incorporées, enserré de façon étanche à l'air entre un couvercle de ressort pneumatique (2) et un piston déroulant de ressort pneumatique (3), qui limite avec le couvercle de ressort pneumatique (2) et le piston déroulant de ressort pneumatique (3) une chambre de travail (5) remplie d'air comprimé et qui roule sur le piston déroulant de ressort pneumatique (3) en formant un pli roulant (6), dans lequel le soufflet de ressort pneumatique (4) présente un premier soufflet partiel de ressort pneumatique (8) et un second soufflet partiel de ressort pneumatique (9), qui sont reliés l'un à l'autre dans une région de recouvrement (10) et qui présentent des couches d'éléments de résistance, qui s'étendent sous un angle différent par rapport à un axe longitudinal du ressort pneumatique (L), dans lequel le premier et le second soufflets partiels de ressort pneumatique (8, 9) sont prévus de façon séparée par un assemblage serré librement mobile disposé dans la région de recouvrement (10) et il est prévu comme assemblage serré un anneau de soutien (11) disposé sur un côté intérieur du soufflet de ressort pneumatique (4), qui est prévu en position dans le soufflet de ressort pneumatique (4) au moyen d'un anneau de serrage (12), **caractérisé en ce que** l'anneau de soutien (11) est prévu en guidage radial par un prolongement axial (15) du couvercle de ressort pneumatique (2).

2. Ressort pneumatique (1) selon la revendication 1, **caractérisé en ce que** le premier soufflet partiel de ressort pneumatique (8) est réalisé sous forme de pli souple en torsion (13).

3. Ressort pneumatique (1) selon une revendication 1 ou 2, **caractérisé en ce que** le premier soufflet partiel de ressort pneumatique (8) est prévu sous forme de soufflet axial avec des couches d'éléments de résistance parallèles ou pratiquement parallèles à l'axe longitudinal du ressort pneumatique (L) et le second soufflet partiel de ressort pneumatique (9) est prévu sous forme de soufflet à couches croisées avec des éléments de résistance s'étendant sous un angle par rapport à l'axe longitudinal du ressort pneumatique (L).

4. Ressort pneumatique (1) selon une revendication 1 ou 2, **caractérisé en ce que** le premier soufflet partiel de ressort pneumatique (8) est prévu sous forme de soufflet à couches croisées avec des éléments de résistance s'étendant sous un premier angle par rapport à l'axe longitudinal du ressort pneumatique (L) et le second soufflet partiel de ressort pneumatique (9) est prévu sous forme de soufflet à couches croisées avec des éléments de résistance s'étendant sous un second angle par rapport à l'axe longitudinal du ressort pneumatique (L) .
